# EUROPÄISCHE PATENTSCHRIFT

(11) **EP 1 566 526 B1**
(45) Veröffentlichungstag und Bekanntmachung des Hinweises auf die Patenterteilung: **02.01.2013**
(21) Anmeldenummer: 05003510.4
(22) Anmeldetag: 18.02.2005
(51) Int. Cl.: F01P 5/12, F16D 35/02

(54) **Kühlmittelpumpe für ein Kraftfahrzeug, mit regelbarem Antrieb**
Coolant pump for motor vehicle, with adjustable drive
Pompe de refroidissement pour véhicule à moteur, avec dispositif d'entraînement réglable

(30) Priorität: 23.02.2004 DE 102004009073
(43) Veröffentlichungstag der Anmeldung: 24.08.2005
(73) Patentinhaber: Behr GmbH & Co. KG, 70469 Stuttgart (DE)
(72) Erfinder: Baumgartner, Roland, 71691 Freiberg (DE); Maus, Ralf, 70825 Korntal-Münchingen (DE); Schultheiss, Gerold, 75173 Pforzheim (DE)
(74) Vertreter: Grauel, Andreas

(56) Entgegenhaltungen:
- EP-A- 0 232 995
- EP-A- 0 293 102
- EP-A- 0 562 226
- EP-A- 1 353 051
- EP-A- 1 391 624
- EP-A2- 1 120 578
- WO-A-01/14759
- DE-A1- 4 037 265
- DE-A1- 19 810 296
- DE-U1- 9 103 493
- US-A- 4 320 723
- US-A1- 2002 012 593
- PATENT ABSTRACTS OF JAPAN Bd. 017, Nr. 038 (M-1358), 25. Januar 1993 (1993-01-25) -& JP 04 258530 A (USUI INTERNATL IND CO LTD), 14. September 1992 (1992-09-14)

## Beschreibung

Die vorliegende Erfindung betrifft eine Kühlmittelpumpe für ein Kraftfahrzeug mit einem regelbaren Antrieb, insbesondere eine Wasserpumpe in einem Kraftfahrzeug.

Regelbare Antriebe für ein Kraftfahrzeug sind bekannt und dienen beispielsweise zur Regelung der Wasserpumpendrehzahl, um den Volumenstrom des Kühlmediums für einen Verbrennungsmotor in Abhängigkeit der abzuführenden Wärmeenergie zu regeln. Die im Stand der Technik verwendeten Kupplungen weisen unter anderem das Problem auf, dass eine verlässliche Drehzahleinstellung aufgrund der schwierigen Drehmomentübertragung problematisch ist bzw. der Regelbereich relativ klein ist, um insbesondere auch einen wirtschaftlich sinnvollen Einsatz in einem Kraftfahrzeug, insbesondere für einen Verbrennungsmotor, zu ermöglichen.

Im Stand der Technik sind ferner Antriebe bekannt, deren Abtriebsdrehzahl in Abhängigkeit des Füllgrades einer Kupplung mit Scherflüssigkeit geregelt wird, wobei u. a. bei abnehmender Ölmenge die Gefahr eines unkontrollierten Stillstandes des Antriebs besteht. Dies führt beispielsweise beim Antrieb einer Wasserpumpe in einem Kraftfahrzeug dazu, dass die vom Verbrennungsmotor erzeugte Wärme nicht ausreichend abgeführt wird und eine Motorüberhitzung droht.

Ähnliche Nachteile haben auch sogenannte Hysteresekupplungen, die jedoch zusätzlich Regelungsprobleme in kleinen Drehmomentbereichen aufweisen, so dass auch hier die Gefahr besteht, dass ein unkontrollierter Stillstand des Antriebs der Kupplung auftritt.

Die WO 01/14759 offenbart eine Kühlmittelpumpe nach dem einleitenden Teil des Anspruchs 1.

Aufgabe der vorliegenden Erfindung ist es somit, einen regelbaren Antrieb für ein Kraftfahrzeug bereitzustellen, welcher die im Stand der Technik bekannten Nachteile vermeidet oder wenigstens reduziert und aufgrund einer verbesserten Drehzahlregelung des angetriebenen Aggregats, wie beispielsweise einer Wasserpumpe, den Betrieb eines Verbrennungsmotors verbessert.

Der erfindungsgemäße regelbare Antrieb für ein Kraftfahrzeug, insbesondere für eine Wasserpumpe in einem Kraftfahrzeug, weist eine drehbar gelagerte Welle auf, auf welcher wenigstens ein drehfest gelagerter Abtriebskörper und wenigstens ein drehbar gelagerter Antriebskörper angeordnet sind. Zwischen dem Antriebskörper und dem Abtriebskörper ist ein Kupplungsbereich angeordnet, welcher ein viskoses Fluid aufnehmen kann. Der regelbare Antrieb weist wenigstens einen erster und wenigstens einen zweiten Strömungspfad auf, welche einen Fluidvorratsraum mit dem Kupplungsbereich zwischen dem Antriebs- und Abtriebskörper verbinden. Der regelbare Antrieb weist ferner eine, mit wenigstens einem Aktuator in ihrer Position veränderbare Einrichtung auf, welche wenigstens eine Durchgangsöffnung wenigstens eines Strömungspfades des Antriebs verändert.

Als Antriebskörper werden gemäß der vorliegenden Erfindung wenigstens teilweise profilierte Scheiben verstanden, die drehbar oder drehfest auf einer Welle gelagert sind und insbesondere zur Übertragung eines vorgegebenen Drehmoments verwendet werden.

Als Abtriebskörper werden ebenfalls wenigstens teilweise profilierte Scheiben verstanden, die mit wenigstens einem Antriebskörper in der Art zusammenwirken, dass direkt oder indirekt ein vorgegebenes Drehmoment von dem Antriebskörper auf den Abtriebskörper übertragen wird.

Der Begriff Strömungspfad wird gemäß der vorliegenden Erfindung für Bereiche des regelbaren Antriebs verwendet, die wenigstens teilweise von einem viskosen Fluid durchströmt werden.

Gemäß einer besonders bevorzugten Ausführungsform weist der Antrieb der Kühlmittelpumpe insbesondere einen Kupplungsbereich auf, der im wesentlichen durch ineinander greifende, konzentrische Profilstrukturen an wenigstens je einer Seite des Antriebs- und Abtriebskörpers gebildet wird. Durch diesen Kupplungsbereich sind der Antriebs- und Abtriebskörper zur Übertragung insbesondere eines vorgegebenen Drehmoments koppelbar.

Der Antrieb der Kühlmittelpumpe weist erfindungsgemäß wenigstens eine steuerbare Einrichtung auf, die insbesondere mit einem Magnetfeld, dass beispielsweise durch ein elektromagnetisch induziertes Magnetfeld des Aktuators gesteuert wird. Der Aktuator weist hierfür wenigstens eine, insbesondere eine Vielzahl von Magnetspulen auf, die mittels einer Steuerungsleitung mit einer Steuerungseinrichtung verbunden sind. In Kombination mit weiteren vorzugsweise ferromagnetischen Bauteilen des erfindungsgemäßen Antriebs wird ein vorgegebenes Magnetfeld innerhalb des Antriebes gesteuert aufgebaut.

Gemäß der Erfindung sind die elektromagnetisch steuerbaren Einrichtungen Ventile, insbesondere Sitzventile, welche gemäß einer besonders bevorzugten Ausführungsform wenigstens eine Rückstelleinrichtung aufweisen.

Die elektromagnetisch steuerbare Einrichtung weist erfindungsgemäß wenigstens einen axial beweglichen Anker auf, auf welchen eine magnetische Stellkraft, insbesondere die durch den Aktuator induzierte elektromagnetische Stellkraft, wirkt.

Gemäß der Erfindung weist der Antrieb der Kühlmittelpumpe zwei steuerbare Einrichtungen auf, welche gegensätzlich oder gegensinnig einen Strömungspfad öffnen und einen anderen Strömungspfad schliessen.

Es liegt auch im Sinn der vorliegenden Erfindung eine steuerbare Einrichtung vorzusehen, welche mehrere Strömungspfade des Antriebes öffnet beziehungsweise schliesst. Es liegt auch im Sinn der vorliegenden Erfindung, dass die steuerbare Einrichtung eine Vielzahl von Zwischenstellungen einnehmen kann, um den Volumenstrom des viskosen Fluid in Abhängigkeit von wenigstens einem vorgegebenen Parameter zu steuern beziehungsweise zu regeln.

Gemäß der Erfindung ist der Aktuator ausserhalb des rotierenden Kupplung, gehäuses angeordnet. Die Steuerung des Fluidniveaus im Kupplungsbereich zwischen dem Antriebs- und Abtriebskörper wird gemäß einer weiteren besonders bevorzugten Ausführungsform durch ein zeitlich veränderbares ÖfFnungsverhältnis der steuerbaren Einrichtungen bezüglich der Strömungspfade bewirkt.

Ferner ist gemäß einer besonders bevorzugten Ausführungsform in der Ruhestellung der steuerbaren Einrichtung der Strömungspfad in den Kupplungsbereichen für das Fluid geöffnet und der Strömungspfad für das Fluid aus dem Kupplungsbereich heraus geschlossen.

Als Ruhestellung wird gemäß der vorliegenden Erfindung insbesondere der Zustand bezeichnet, in dem kein elektromagnetisches Magnetfeld vom Aktuator induziert wird.

Diese Ruhestellung wird gemäß der Erfindung durch eine Rückstelleinrichtung bewirkt, die eine Rückstellfeder ist, welche beispielsweise als doppelringförmige Plattfeder ausgestaltet wird.

Solch eine Rückstellfeder kann eine Rückstellkraft dadurch bewirken, dass sie aus einer Ruheposition durch das Aufbringen beispielsweise einer elektromagnetischen Stellkraft in der Art verändert wird, dass die hierdurch hervorgerufene Lageänderung die Rückstellfeder spannt, um bei Abfall des Magnetfeldes die steuerbare Einrichtung, wie beispielsweise das Kippventil, in ihre Ruhestellung zurückführt.

Es liegt auch im Sinn der vorliegenden Erfindung statt einer doppelringförmigen Rückstellfeder, andere Federeinrichtungen zu verwenden, welche gemäß einer weiteren besonders bevorzugten Ausführungsform auch in Ruhestellung der steuerbaren Einrichtung eine vorgegebene Rückstellkraft auf die steuerbare Einrichtung aufrechterhält.

Die Rückstellkraft ist gemäß einer weiteren besonders bevorzugten Ausführungsform so ausgerichtet, dass sie vom Aktuator insbesondere von dessen Spulen weggerichtet wirkt.

Gemäß einer weiteren besonders bevorzugten Ausführungsform weist der Antrieb für eine Kühlmittelpumpe wenigstens einen weiteren Strömungspfad auf, welcher keine steuerbare Einrichtung aufweist, mit welcher die Durchgangsöffnung des Strömungspfades verändert wird.

Gemäß einer weiteren besonders bevorzugten Ausführungsform erfolgt die Steuerung der elektromagnetischen Einrichtung insbesondere des hieran angeordneten Ankers durch ein pulsweitenmoduliertes Signal, mit welchem die Steuerung des Aktuators erfolgt.

Insbesondere um eine verbesserte Steuerung bzw. Regelung der elektromagnetisch steuerbaren Einrichtung bereitzustellen, wird gemäß einer weiteren besonders bevorzugten Ausführungsform auf der Welle des Antriebs und/oder der Welle der Kühlmittelpumpe ein Impulsgeber angebracht, der zur Bestimmung der Drehzahl vorgesehen ist.

Die Lagerung des Antriebs erfolgt erfindungsgemäß im Bereich über dem Lager der Kühlmittelpumpe.

Gemäß einer weiteren besonders bevorzugten Ausführungsform weist der Antrieb für eine Kühlmittelpumpe eine Verriegelungseinrichtung auf, mit welcher insbesondere der Antriebs- und der Abtriebskörper form- und/oder kraftschlüssig verbunden werden können. Diese Einrichtung dient insbesondere dazu, bei einem möglichen Ausfall des Antriebes eine Drehmomentübertragung zwischen dem Antriebs- und dem Abtriebskörper bereit zu stellen.

Die Erfindung wird nachfolgend anhand verschiedener Ausführungsformen detailliert beschrieben. Es sei jedoch darauf hingewiesen, dass durch die hierin gezeigten Ausführungsformen der durch die Ansprüche festgelegte Umfang der vorliegenden Erfindung nicht beschränkt werden soll.
- Fig. 1: eine Schnittdarstellung des Antriebs einer Wasserpumpe in einer ersten Schaltposition;
- Fig. 2: eine Schnittdarstellung des Antriebs einer Wasserpumpe in einer zweiten Schaltposition;
- Fig. 3: zeigt eine weitere alternative Ausführungsform des Antriebs;
- Fig. 4: eine weitere alternative Ausführungsform des Antriebs mit einer Sperreinrichtung;
- Fig. 5: schematisierte Darstellung einer alternativen Ausführungsform des Antriebs;
- Fig. 6: eine Rückstelleinrichtung für einen Antrieb;
- Fig. 7: ein Funktionsschema für die Ventilsteuerung eines Antriebs.

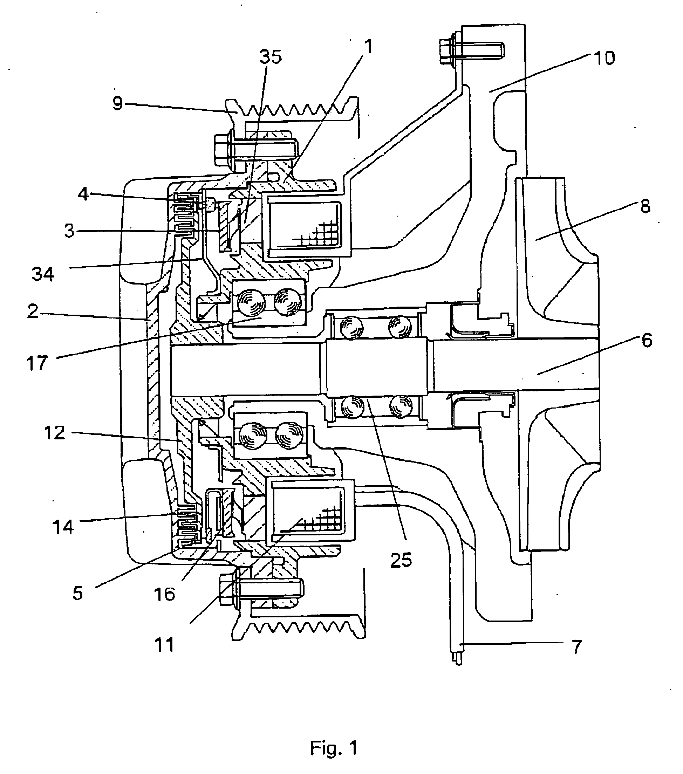

Gemäß dem in Fig. 1 dargestellten Antrieb einer Wasserpumpe weist diese eine integrierte Flüssigkeitsreibkupplung auf, die beispielsweise in zwei Bereiche untergliedert ist. Der erste Bereich wird als sogenannter Kupplungsbereich 14 durch den Raum bestimmt, in welchem das Gehäuse des Antriebs als Antriebskörper 2 und der mit der Wasserpumpenwelle verbundene Abtriebskörper 12 zur Übertragung eines Drehmoments koppelbar verbunden werden können. Dieser Kupplungsbereich wird insbesondere durch vorzugsweise mehrere enge, labyrinthförmige Spalte zwischen der Antriebsscheibe und der Abtriebsscheibe gebildet, wobei die Drehmomentübertragung durch eine vorgegebene Menge an viskosen Fluid im Kupplungsbereich bestimmt wird. Der zweite Bereich ist ein Vorratsraum 13, in weichem das nicht zur Drehmomentübertragung benötigte viskose Fluid gehalten bzw. bevorratet wird.

Zwischen diesen beiden Bereichen, die auf etwa dem gleichen Durchmesser innerhalb des Antriebsgehäuses liegen können, ist beispielsweise eine Trennwand 34 mit mehreren, vorzugsweise zwei Ventilen 4, 5 angeordnet, die den Volumenstrom des viskosen Fluids in wenigstens jeweils eine Richtung steuern bzw. regeln.

Fig. 1 zeigt sowohl das Rücklaufventil 4, als auch das Zulaufventil 5 zu erkennen, welche den Strömungspfad zwischen den zuvor beschriebenen Bereichen öffnen bzw. schliessen. Der Antrieb gemäß des hier dargestellten Ausführungsbeispiels weist ferner eine Pumpenwelle 6, ein Pumpenlaufrad 8 und ein Pumpengehäuse 10 auf. Ferner zeigt die Fig. 1 die steuerbare Einrichtung 3, welche über einen Aktuator, welcher wenigstens eine Magnetspule 11 aufweist angesteuert wird.

Das Drehmoment für den erfindungsgemäßen Antrieb wird gemäß der hier dargestellten Ausführungsform über eine Riemenscheibe 9 und einem hiermit verbundenen Antriebsaggregat auf den erfindungsgemäßen Antrieb übertragen und über die drehfeste Verbindung in den Kupplungsbereich des Antriebs eingeleitet.

Bei geöffneten Zulaufventil 5, wie dies in Fig. 1 dargestellt ist, füllt sich der Kupplungsbereich mit viskosen Fluid und überträgt das von außen eingeleitete Drehmoment auf die Abtriebsscheibe 12. Diese ist drehfest mit der Pumpenwelle 6 verbunden, so dass das Pumpenlaufrad 8 in Rotation versetzt wird. Die Lagerung der Riemenscheibe 9 und des Gehäusedeckels erfolgt über das Lager 17, welches gemäß dem Ausführungsbeispiel in Bild 1 versetzt zu dem Pumpenwellenlager 25 angeordnet ist.

Die Steuerung des für die Drehmomentübertragung maßgeblichen Niveaus des viskosen Fluid im Kupplungsbereich 14 wird dadurch erreicht, dass das Öffnungsverhältnis der beiden Ventile 4 und 5 zeitlich veränderbar ist. Die Betätigung der Ventile erfolgt dabei durch wenigstens einen Aktuator, der außerhalb der rotierenden Flüssigkeitsreibkupplung angeordnet ist und stationär verankerte Magnetspulen 11 aufweist.

Das bei Bestromung der Spulen erzeugte Magnetfeld wird über ferromagnetische Bauteile des Kupplungsgehäuses in das Gehäuseinnere des erfindungsgemäßen Antriebs geleitet und wirkt dort axial auf einen beweglichen Anker 3 der elektromagnetisch steuerbaren Einrichtung. Der Anker selbst betätigt beispielsweise durch seine axiale Bewegung über örtlich angebrachte Zungen oder Hebel, die Ventile 4 und 5 des Antriebs, und bewirken hierdurch ein Befüllen oder ein Entleeren des Kupplungsbereichs 14.

Gemäß einer besonders bevorzugten Ausführungsform der vorliegenden Erfindung sind die Ventile in Bezug auf die durch den Anker 3 induzierte Stellbewegung so angeordnet, dass jeweils ein Ventil geöffnet und das andere geschlossen ist.

Um die Funktionssicherheit eines Fahrzeuges ferner sicherzustellen, ist in einer bevorzugten Ausführungsform der vorliegenden Erfindung die Anordnung der Ventile so gewählt, dass das Zulaufventil 5 geöffnet und das Rücklaufventil 4 geschlossen ist. Hierbei befindet sich der axial bewegliche Anker 3 in einer im Ruhezustand des Aktuators beabstandeten Position zu dem Aktuator des erfindungsgemäßen Antriebs.

Diese Position wird insbesondere auch dadurch bewirkt, dass eine Rückstellfeder 16 vorgesehen ist, welche neben einer Zentrierung des beispielsweise ring- bzw. segmentförmigen Ankers 3, diesen auch im stromlosen Zustand der Magnetspulen 11 in eine, in Bezug auf die Magnetspule entfernte Stellung drängt. In dieser Stellung wird infolge der zentrifugalen Kraft ein Maximum an viskosem Fluid in den Kupplungsbereich gefördert, so dass die Abtriebsscheibe und damit die Wasserpumpe mit vorgegebener Drehzahl angetrieben wird.

Zwischen der Spule 11 und dem Anker 3 sind ferner gemäß dem in Fig. 1 dargestellten Ausführungsbeispiel magnetisch nicht leitende Bauteile bzw. Baugruppen 35 zwischengeschaltet, um den Magnetfluss im Antrieb auf einem vorgegebenen Pfad zu leiten.

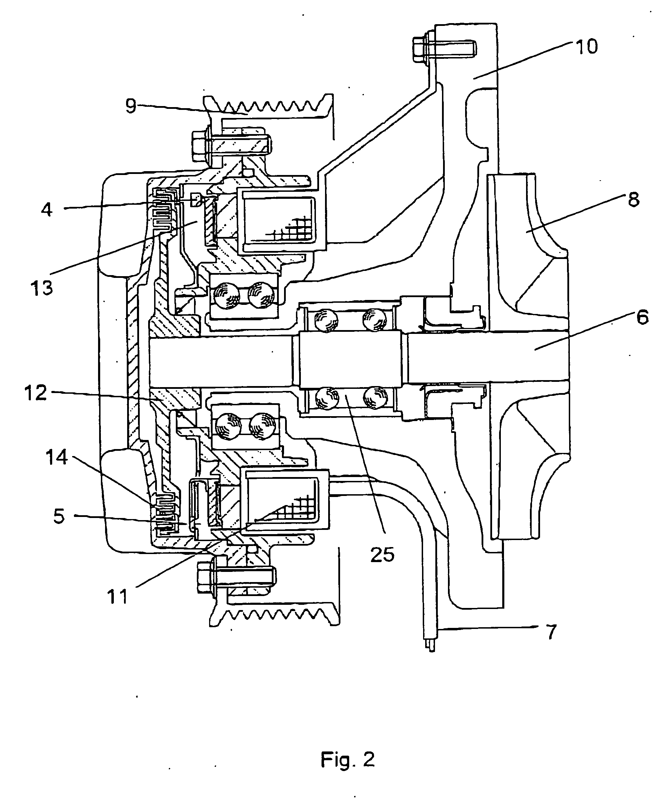

Bei permanenter Bestromung der Magnetspulen 11 (vgl. Fig. 2) wird der Anker aufgrund der auf ihn wirkenden Magnetkraft angezogen und gegen die Rückstellkraft der Rückstellfeder in eine entgegengesetzte Endlage in Bezug auf die Ruhelage gezogen. In dieser Stellung ist gemäß der hier dargestellten Ausführungsform das Zulaufventil 5 geschlossen, so dass kein viskoses Fluid in den Kupplungsbereich 14 fließen kann. Auf der anderen Seite ist jedoch durch die Anordnung und Schaltung der Ventile das Rücklaufventil 4 in dieser Schaltstellung geöffnet, wobei mittels einer, bei Flüssigkeitsreibkupplungen gebräuchlichen Abpumpeinrichtungen das viskose Fluid aus dem Kupplungsbereich 14 in den Vorratsbereich 13 des Antriebs gepumpt wird.

Bezüglich der Funktion und Ausführung einer solchen Abpumpeinrichtung bzw. der grundsätzlichen Funktion einer Flüssigkeitsreibkupplung wird auf die DE 10338432 verwiesen.

Zur Erhaltung einer Minimaldrehzahl der Wasserpumpe sind gemäß einer nicht dargestellten Ausführungsform des erfindungsgemäßen Antriebs ein oder mehrere Arbeitsspalte, d. h. radial ausgerichtete Strömungspfade außerhalb der Abpumpeinrichtung angeordnet, so dass der Kupplungsbereich nicht vollständig entleert wird und aufgrund des Verbleibs einer vorgegebenen Menge an viskosen Fluid im Kupplungsbereich ein vorgegebenes Mindestdrehmoment zum Antrieb der Wasserpumpe erhalten bleibt.

Fig. 2 zeigt die erfindungsgemäße Ausführungsform eines regelbaren Antriebs gemäß Fig. 1 im bestromten Zustand der Magnetspulen 11. Hierbei ist einerseits das Zulaufventil 5 geschlossen und das Rücklaufventil 4 geöffnet.

Um die geforderte Einstellung der vorgegebenen wasserpumpendrehzahl zu erreichen und zu steuem, ist bei der Steuerung eine Abstimmung der Schaltcharakteristik der Ventile und das Zusammenwirken der Öffriungsverhältnisse der Ventile maßgeblich. So ergibt sich die Funktion der Drehzahlregelung zwischen einer vorgegebenen minimalen und einer vorgegebenen maximalen Antriebsdrehzahl erfindungsgemäß dadurch, dass der Anker der steuerbaren Einrichtung durch ein pulsweitenmoduliertes Signal an den Magnetspulen bzw. der Magnetspule des Aktuators getaktet wird und hierdurch hin bzw. her bewegt wird. Das pulsweitenmodulierte Signal bestimmt somit das Tastverhältnis der Ankerbewegung und hierdurch das zeitliche Öffnungsverhältnis der beiden Ventile.

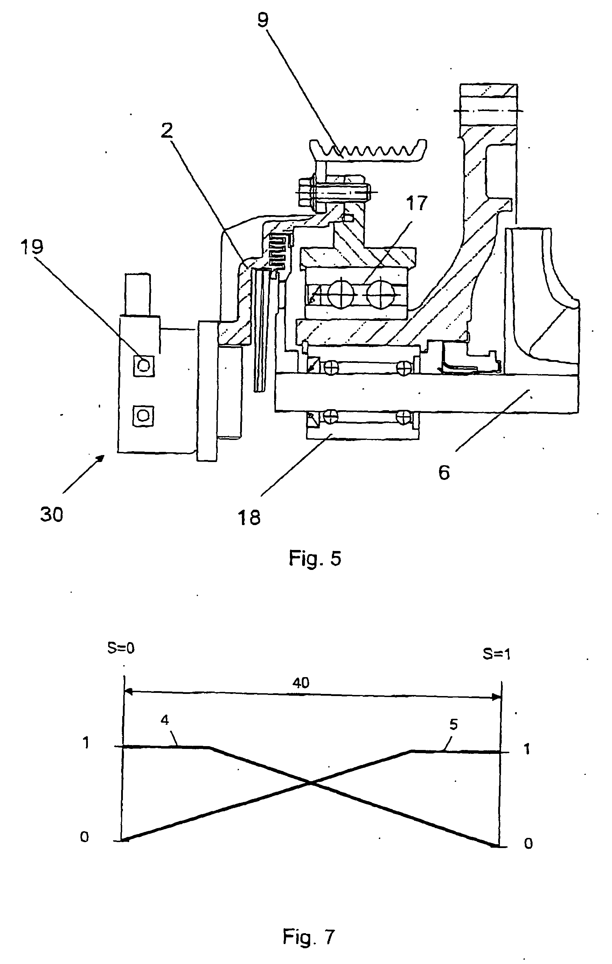

In Fig. 7 ist das Öffnungsverhalten der Ventile 4 und 5 mit einer Grafik veranschaulicht.

In Abhängigkeit der Bestromung des Aktuators bewegt sich der Anker 3 von einer Ruheposition in eine Stellposition. Diese Ankerbewegung ergibt sich in der Darstellung aus Fig. 7 mit dem Bezugszeichen 40, wobei links die Position des Ankers in der Ruheposition beim unbestromten Aktuator (s = 0) und rechts bei bestromtem Aktuator (s = 1) angedeutet ist.

Die Linien 4 und 5 geben die Stellposition der Ventile 4 und 5 zwischen einer geöffneten Position 1 in eine geschlossene Position 0 an. So ist das Zulaufventil 4 im unbestromten Zustand des Aktuators geöffnet und wird im bestromten Zustand geschlossen. Umgekehrtes gilt für die Position des Rücklaufventils 5.

Gemäß einer besonders bevorzugten Ausführungsform des erfindungsgemäßen Antriebs ist die Geometrie der Ventile und der Abpumpeinrichtung so ausgelegt, dass beispielsweise ein Tastverhältnis von 60% Bestromung und 40% Nichtbestromung der Magnetspulen 11 bei einer Taktfrequenz von z. B. 1 Hertz eine Reduzierung der Antriebsdrehzahl um 40% bewirkt.

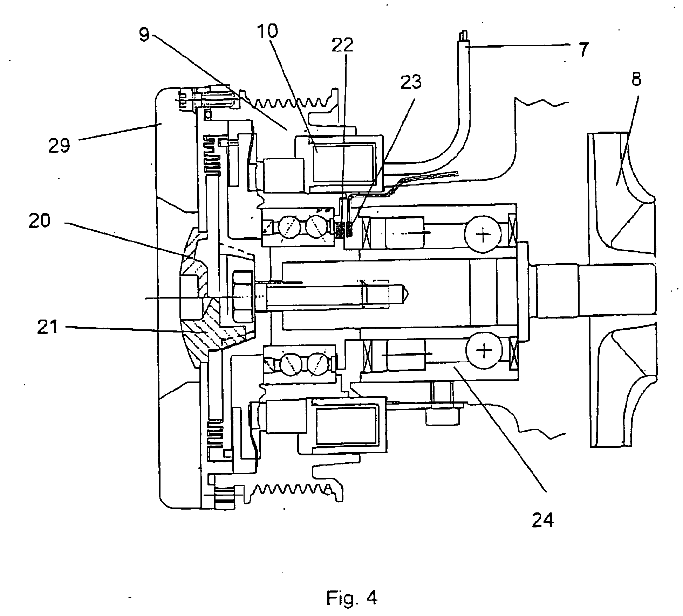

Zur Verbesserung der Regelungsgüte bzw. der Steuerungsgüte des erfindungsgemäßen Antriebs kann dieser Antrieb ferner einen Drehzahlsensor aufweisen. Hierzu kann wie in Fig. 4 dargestellt ein Impulsgeber 22 an der Pumpenwelle oder einem mit ihr verbundenen Teil befestigt sein, dessen Signal durch einen Drehzahlsensor 23 abgegriffen wird und an eine Steuerungseinrichtung übertragen werden kann. Zweckmäßigerweise ist der Sensor mit der Magnetspule 11 verbunden, um insbesondere den Vorteil von gemeinsamen elektrischen Anschlüssen zu nutzen.

In der Ausführungsform nach Fig. 1 und 2 ist das Kupplungsgehäuse über Lager, vorzugsweise Wälzlager abgestützt, welche direkt auf dem Pumpengehäuse angeordnet sind. Hierdurch ergibt sich u. a. ein Vorteil, dass die Pumpenwelle 6 mit der Abtriebsscheibe 12 und das Pumpenlaufrad 8 selbst weitgehend frei sind von Abstützkräften sind, die beispielsweise auf die Riemenscheibe wirken. Hierdurch kann die Lagerung entsprechend leichter bzw. einfacher ausgeführt werden.

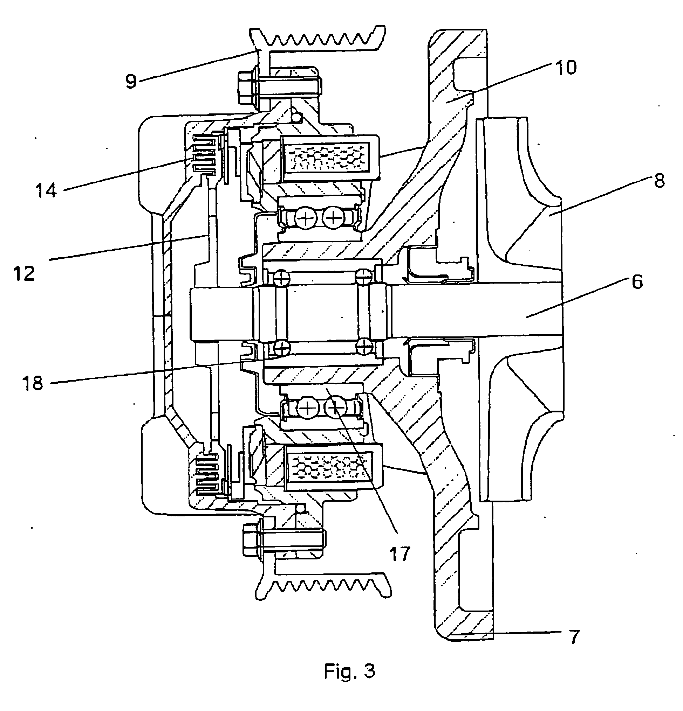

Fig. 3 zeigt den Antrieb der erfindungsgemäßen Kühlmittelpumpe, bei welchem die Lager (18; 17) für das Pumpenlaufrad 8 und die Riemenscheibe 9 bzw. den Gehäusedeckel übereinandergesetzt angeordnet sind, wodurch die Baulänge des erfindungsgemäßen Antriebs reduziert werden kann.

Das Übereinandersetzen der beiden Lager wird jedoch auch bereits dadurch erzielt, dass wenigstens ein vorgegebener Bereich der Lager übereinander angeordnet wird.

Bei der alternativen Ausführungsform, wie sie in Fig. 4 dargestellt ist, ist der regelbare Antrieb als eine separate Einheit an eine Wasserpumpe angeordnet. Die Lagerung des Antriebs auf die Welle der Wasserpumpe ist nicht Teil der Erfindung.

Gemäß dem in Fig. 4 dargestellten Ausführungsbeispiels kann die erfindungsgemäße Antriebseinrichtung eine Blockiervorrichtung aufweisen, mit welcher bei einem eventuellen Ausfall der Flüssigkeitsreibkupplung zwischen dem angetriebenen Kupplungsgehäuse bzw. Antriebskörper und der Abtriebsscheibe eine insbesondere kraftschlüssige Verbindung hergestellt wird. Hierzu weist der frontseitige Gehäusedeckel eine verschließbare Öffnung 20 auf, in welche ein Einsatz 21 eingesetzt werden kann, welcher einen Form-und/oder Kraftschluss mit der Pumpenwelle über den Antriebskörper und Abtriebskörper herstellt.

In Fig. 5 ist eine weitere Ausführungsform des Antriebs dargestellt, bei welcher der Aktuator an der Vorderseite, d. h. die Frontseite des Antriebs, angeordnet ist. Die Lagerung des Aktuators 30 erfolgt über das Lager 19, welches sich auf dem rotierenden Kupplungsteil abstützt.

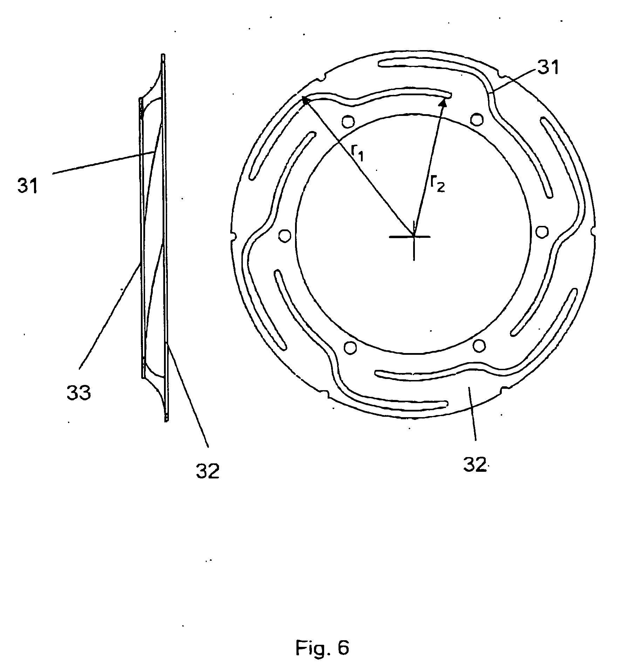

Fig. 6 zeigt eine Rückstellfeder für den Antrieb, welche die steuerbare Einrichtung vorzugsweise in seine Ruhestellung drängt. Hierbei kann die Rückstellfeder einteilig ausgeführt sein und besteht gemäß der in Fig. 6 dargestellten Ausführungsform im wesentlichen aus zwei konzentrischen Ringen 32, 33, die durch mehrere einzelne Arme und/oder Lamellen verbunden sind. Diese federnden Lamellen sind im wesentlichen gleichmäßig über einen vorgegebenen Radius der Ringe verteilt und in einem flachen Winkel zur Tangente an den inneren Ring 33 der Rückstellfeder ausgerichtet. Ferner erstrecken sie sich vorzugsweise nicht über einen konstanten Radius, sondern weisen eine gebogene Form auf, die sich über einen vorgegebenen Radiusabschnitt r₁ - r₂ der Ringe erstrecken.

## Patentansprüche

1. Kühlmittelpumpe für ein Kraftfahrzeug, mit einem regelbaren Antrieb umfassend
- eine drehbar gelagerte Welle (6),
- einen auf der Welle drehfest gelagerten Abtriebskörper (12),
- einen auf der Welle drehbar gelagerten, ein Kupplungsgehäuse bildenden Antriebskörper (1) und
- einen, zwischen dem Antriebskörper (1) und dem Abtriebskörper (12) im Kupplungsgehäuse angeordneten, ein viskoses Fluid aufnehmenden Kupplungsbereich (14),
wobei wenigstens ein erster und wenigstens ein zweiter Strömungspfad vorgesehen sind, welche einen Fluidvorratsraum (13) mit dem Kupplungsbereich (14) verbinden,
wobei zwei steuerbare, mit wenigstens einem Aktuator (11) in ihrer Position veränderbare Einrichtungen (4, 5) vorgesehen sind, die als Ventile gebildet sind, welche je eine Durchgangsöffnung eines Strömungspfads verändern, und welche gegensätzlich oder gegensinnig einen Strömungspfad öffnen bzw. schließen,
wobei die Einrichtungen (4, 5) wenigstens einen axial beweglichen Anker (3) aufweisen und mit einem elektromagnetisch induzierten Magnetfeld des Aktuators (11) gesteuert werden, dadurch dass auf den Anker (3) eine magnetische Stellkraft wirkt,
wobei der Aktuator (11) außerhalb des rotierenden Kupplungsgehäuses angeordnet ist und stationär verankerte Magnetspulen aufweist,
wobei die Ventile wenigstens eine als, Rückstellfeder, insbesondere als doppelringförmige Rückstellfeder, ausgestattete Rückstelleinrichtung (16) aufweisen,
**dadurch gekennzeichnet dass**
das Lager (17) des Antriebskörpers (1) im Bereich über dem Lager (18) der Welle (6) angeordnet ist.

2. Kühlmittelpumpe gemäß Anspruch 1, **dadurch gekennzeichnet; dass** der Kupplungsbereich (14) im Wesentlichen durch ineinandergreifende, konzentrische Profilstrukturen an wenigstens je einer Seite des Abtrieb- und Antreibkörpers (12;1) gebildet wird, durch welchen der Antriebs- und Abtriebskörper zur Übertragung eines Drehmoments koppelbar sind.

3. Kühlmittelpumpe gemäß wenigstens einem der voranstehenden Ansprüche,
**dadurch gekennzeichnet, dass** die Steuerung des Fluidniveaus im Kupplungsbereich (14) durch ein zeitlich veränderbares Öffnungsverhältnis der steuerbaren Einrichtungen (4, 5) erfolgt.

4. Kühlmittelpumpe gemäß wenigstens einem der voranstehenden Ansprüche,
**dadurch gekennzeichnet**, das in Ruhestellung der steuerbaren Einrichtungen (4,5) der Strömungspfad in den Kupplungsbereich (14) für das Fluid geöffnet und der Strömungspfad für das Fluid aus dem Kupplungsbereich (14) heraus geschlossen ist.

5. Kühlmittelpumpe gemäß wenigstens einem der voranstehenden Ansprüche,
**dadurch gekennzeichnet, dass** die Rückstelleinrichtung (16) eine Rückstellkraft bewirkt, welche vom Aktuator (11) weg gerichtet ist.

6. Kühlmittelpumpe gemäß wenigstens einem der voranstehenden Ansprüche,
**dadurch gekennzeichnet, dass** wenigstens ein weiterer Strömungspfad vorgesehen ist, welcher keine steuerbare Einrichtung (4, 5) aufweist, mit welcher die Durchgangsöffnung des Strömungspfads verändert wird

7. Kühlmittelpumpe gemäß wenigstens einem der voranstehenden Ansprüche,
**dadurch gekennzeichnet, dass** die Steuerung der elektromagnetisch steuerbaren Einrichtungen (4, 5), insbesondere des Ankers (3) durch ein pulsweitenmoduliertes Signal das den Aktuator (14) steuert oder regelt erfolgt.

8. Kühlmittelpumpe gemäß wenigstens einem der voranstehenden Ansprüche,
**dadurch gekennzeichnet, dass** auf der Welle (6) Antriebs und/oder der Kühlmittelpumpe ein Impulsgeber (12) zur Bestimmung der Drehzahl vorgesehen ist.

9. Kühlmittelpumpe gemäß wenigstens einem der voranstehenden Ansprüche,
**dadurch gekennzeichnet, dass** der Antrieb eine Verriegelungseinrichtung (21) aufweist, mit welcher der Antriebs- und der Abtriebskörper (1, 12) form-, kraft - und/oder stoffschlüssig verbunden werden.

## Claims

1. To coolant pump for a motor vehicle, comprising a controllable drive having
- a rotatably mounted shaft (6),
- a driven body (12) non-rotatably mounted of the shaft,
- a drive body (1), which forms a coupling housing and is rotatably mounted on the shaft, and
a coupling region (14), which accommodates a viscous fluid and is disposed between the drive body (1) and the driven body (12) in the coupling housing,
wherein at least one first and at least one second flew path are provided, which connect a fluid accumulator chamber (13) to the coupling region (14),
wherein two controllable devices (4, 5) are provided, the positions of which can be changed using at least one actuator (11), and which are designed as valves, each of which changes a passage opening of a flow path, and which open or close a flow path in opposition or in an opposite direction,
wherein the devices (4, 5) comprise at least one axially movable armature (3) and are controlled by an electromagnetically inducted magnetic field of the actuator (11) in that a magnetic actuating force acts on the armature (3),
wherein the actuator (11) is disposed outside the rotating coupling housing and comprises solenoid coils anchored in a stationary manner,
wherein the valves comprise at least one readjusting device (16), which is designed as a readjusting spring, in particular as a coannular readjusting spring, **characterized in that**
the bearing (17) of the drive body (1) is disposed in the region above the bearing (18) of the shaft (6).

2. The coolant pump according to claim 1, **characterized in that** the coupling region (14) is formed substantially by mutually engaging, concentric profiled structures on at least one side each of the driven and driving bodies (12; 1), by way of which the drive and driven bodies can be coupled in order to transfer torque.

3. The coolant pump according to at least one of the preceding claims, **characterized in that** control of the fluid level in the coupling region (14) takes place via a temporally changeable opening ratio of the controllable devices (4, 5).

4. The coolant pump according to at least one of the preceding claims, **characterized in that**, in the neutral position of the controllable devices (4, 5), the flow path for the fluid into the coupling region (14) is open and the flow path for the fluid out of the coupling region (14) is closed.

5. The coolant pump according to at least one of the preceding claims, **characterized in that** the readjusting device (16) induces a readjusting force, which is directed away from the actuator travel (11).

6. The coolant pump according to at least one of the preceding claims, **characterized in that** at least one further flow path is provided, which does not have a controllable device (4, 5) by way of which the passage opening of the flow path is changed.

7. The coolant pump according two at least one of the preceding claim, **characterized in that** control of the electromagnetically controllable devices (4, 5), of the armature (3) in particular, takes place via a pulse-width modulated signal that controls or regulates the actuator (11).

8. The coolant pump according to at least one of the preceding claim, **characterized in that** a pulse generator (12) for determining the rotational speed is provided on the shaft (6) of the drive and/or the coolant pump.

9. The coolant pump according to at least one of the preceding claims, **characterized in that** the drive comprises a locking device (21), via which the drive body and the driven body (1; 12) are connected in a form-fit, nonpositive and/or bonded manner.

## Revendications

1. Pompe à liquide refroidissement pour un véhicule automobile, à dispositif d'entraînement réglable comprenant :
- un arbre (6) monté en rotation,
- un corps de sortie (12) monté sur l'arbre en étant fixe en rotation,
- un corps d'entraînement (1) monté en rotation sur l'arbre et formant un carter d'accouplement, et
- une zone d'accouplement (14) disposée, dans le carter d'accouplement, entre le corps d'entraînement (1) et le corps de sortie (12) et recevant une fluide visqueux,
où il est prévu au moins une premier trajet d'écoulement et au moins un deuxième trajet d'écoulement qui relient un espace d'alimentation en fluide (13), à la zone d'accouplement (14),
où il est prévu deux dispositifs pilotables (4, 5) dont la position peut être modifiée par au moins un actionneur (11), dispositifs qui sont conçus comme des soupapes qui modifient chacune une couverture de passage d'un trajet d'écoulement et qui ouvrent ou ferment un trajet d'écoulement de façon opposée ou en sens inverse, ou les dispositifs (4, 5) présentent au moins une ancre (3) mobile axialement et sont pilotés par un champ magnétique de l'actionneur (11), induit de façon électromagnétique, faisant qu'une force de réglage magnétique agit sur l'ancre (3),
où l'actionneur (11) est disposé à l'extérieur du carter d'accouplement se déplaçant en rotation et présente des bobines magnétiques ancrées fixement,
ou les soupapes présentent au moins une dispositif de rappel (16) conçu comme un ressort de rappel, en particulier comme un ressort de rappel en forme de double anneau,
**caractérisé en ce que**
le palier (17) du corps d'entraînement (1) est disposé dans la zone située au-dessus du palier (18) de l'arbre (6).

2. Pompe à liquide de refroidissement selon la revendication 1, **caractérisé en ce que** la zone d'accouplement (14) est formée à chaque fois sur au moins un côté du corps de sortie et d'entraînement (12; 1), essentiellement par des structures profilées concentriques s'engrenant, zone d'accouplement grâce à laquelle peuvent être couplés le corps d'entraînement et le corps de sortie pour la transmission d'un couple.

3. Pompe à liquide de refroidissement selon au moins l'une ou l'autre des revendications précédentes, **caractérisé en ce que** la commande du niveau de fluide, dans la zone d'accouplement (14), est réalisée par un rapport d'ouverture - modifiable dans le tempos - des dispositifs pilotables (4, 5).

4. Pompe à liquide de refroidissement selon au moins l'une quelconque des revendications précédentes, **caractérisé en ce que**, en position de repos des dispositifs pilotables (4, 5), le trajet d'écoulement est ouvert pour le fluide entrant dans la zone d'accouplement (14), et le trajet d'écoulement est fermé pour le fluide sortant de la zone d'accouplement (14).

5. Pompe à liquide refroidissement selon au moins l'une quelconque des revendications précédentes, **caractérisé en ce que** le dispositif de rappel (16) exerce une force de rappel qui est dirigée loin de l'actionneur (11).

6. Pompe à liquide de refroidissement selon au moins l'une quelconque des revendications précédentes, **caractérisé en ce qu'**il est prévu au moins un autre trajet d'écoulement qui ne présente aucun dispositif pilotable (4, 5) avec lequel est modifiée l'ouverture de passage du trajet d'écoulement.

7. Pompe à liquide de refroidissement selon au moins l'une quelconque des revendications précédentes, **caractérisé en ce que** la commande des dispositifs (4, 5), en particulier de l'ancre (3), pouvant être pilotés de façon électromagnétique, est réalisée par un signal à largeur d'impulsion modulée qui pilote ou régule l'actionneur (11).

8. Pompe à liquide de refroidissement selon au moins l'une quelconque des revendications précédentes, **caractérisé en ce qu'**il est prévu, sur l'arbre (6) du dispositif d'entraînement et/ou de la pompe à liquide de refroidissement, une générateur d'impulsions (12) servant à déterminer la vitesse de rotation.

9. Pompe à liquide de refroidissement selon au moins l'une quelconque des revendications précédentes, **caractérisé en ce que** le dispositif d'entraînement présente un dispositif de verrouillage (21) auquel sont reliés le corps d'entraînement (1) et le corps de sortie (12), par complémentarité de forme, par action de force et/ou par continuité de matière.
